# EUROPEAN PATENT APPLICATION

(11) **EP 4 318 514 A1**
(43) Date of publication of application: **07.02.2024**
(21) Application number: 22775101.3
(22) Date of filing: 09.03.2022
(51) Int. Cl.: H01G 11/12, H01G 11/14, H01G 11/78, H01G 2/10, H01M 10/613, H01M 10/623, H01M 10/625, H01M 10/647, H01M 10/651, H01M 10/6595, H01M 50/202, H01M 50/204, H01M 50/218, H01M 50/227

(54) **POWER STORAGE DEVICE STRUCTURE**

(30) Priority: 23.03.2021 JP 2021048348
(71) Applicant: Kurita Water Industries Ltd., Tokyo 164-0001 (JP)
(72) Inventor: YAGI, Minoru, Tokyo 164-0001 (JP); NOZUE, Mitsuru, Tokyo 164-0001 (JP); KANEKO, Jun, Tokyo 164-0001 (JP)
(74) Representative: Kuhnen & Wacker Patent- und Rechtsanwaltsbüro PartG mbB
(86) International application number: PCT/JP2022/010185
(87) International publication number: WO 2022/202309

(57) **Abstract**

The power storage device structure according to the present invention includes a power storage device and a casing that encloses the power storage device with a gap therebetween, and has a structure in which a molded body containing an acrylic resin or a molded body containing a copolymer of a monomer used for polymerization of an acrylic resin and another monomer is placed in the gap between the power storage device and the casing. The molded body is preferably in the form of a film, sheet, or plate. With such a power storage device structure, it is possible to reduce the risk of ignition in the event of an abnormality such as damage to a power storage device, particularly to a power storage device stack in which multiple power storage devices are stacked, or overcharge.

## Description

### [Technical Field]

The present invention relates to a power storage device structure that encloses a power storage device such as a lithium-ion battery, a lithium-ion capacitor, or an electric double layer capacitor and relates particularly to a power storage device structure that can reduce the risk of ignition in the event of an abnormality such as damage to the power storage device or its overcharge.

### [Background Art]

In recent years, power storage devices such as secondary batteries, lithium-ion capacitors, and electric double layer capacitors configured to accommodate power storage cells using a non-aqueous electrolyte in casings have been used as high-output power sources for mobile equipment and electric vehicles.

Such a power storage device usually has a set upper limit voltage and is controlled so as not to exceed the upper limit voltage by being combined with an appropriate protection circuit. However, if the protection circuit malfunctions and the upper limit voltage is exceeded, if charge and discharge are repeated, or if a short circuit occurs due to an external factor, then, the power storage device may fall into an overcharged state, and the electrolytic solution will react with the electrode material or the like to generate gas, which may increase the internal pressure. This generated gas may contain flammable gases such as electrolytic methane, carbon monoxide, ethylene, ethane, and propane, and there is a risk of ignition or explosion if the gas is released outside the power storage device.

Recently, power storage devices such as lithium-ion capacitors and electric double layer capacitors have been required to have high output and large capacity, and opportunities to use large currents in module configurations in which multiple power storage devices are stacked are increasing. For example, in a module in which multiple power storage devices are stacked, if one power storage device falls into an overcharged state, the other power storage devices continue to function even after the gas is released together with the electrolytic solution, so a large current may continue to flow. Therefore, short circuits may cause severe overheating, thus increasing the risk of ignition or explosion as described above.

As a technique for preventing such ignition of power storage devices, for example, a method is proposed in which the gas generated inside a lithium-ion battery is absorbed by a flammable gas absorbent to prevent the battery from bursting (Patent Documents 1 and 2).

In another proposed method, a fire extinguishing agent is placed inside a lithium-ion battery to lower the temperature of the gas released to the outside when the safety valve opens due to the increase in internal pressure caused by the gas generation inside the battery (Patent Document 3). Still another method is proposed in which a porous material that has adsorbed non-flammable gas, aqueous solvent, or non-flammable solvent in the pores and on the surface is placed inside the lithium-ion battery thereby to prevent ignition due to the gas generated from the lithium-ion battery (Patent Document 4).

### [Prior Art Documents]

### [Patent Documents]

[Patent Document 1] JP2001-155790A
[Patent Document 2] JP2003-077549A
[Patent Document 3] JP2010-287488A
[Patent Document 4] JP2013-187089A

### [Summary of the Invention]

### [Problems to be solved by the Invention]

Unfortunately, however, a large amount of gas is instantaneously generated during electrical abnormalities or thermal runaway, so the method of placing a gas adsorbent inside a power storage device as described in Patent Documents 1 and 2 involves a problem in that both the amount of gas adsorption and the rate of gas adsorption are insufficient for a limited space of the power storage device, and the ejection of gas from the power storage device can not be suppressed completely. On the other hand, according to the method of placing a fire extinguishing agent in the power storage device in order to lower the temperature inside the lithium-ion battery as described in Patent Document 3 or the method of placing a porous material that has adsorbed non-flammable gas, aqueous solvent, or non-flammable solvent in the pores and on the surface of the porous material as described in Patent Document 4, there are problems in that the effects cannot be fully exhibited if the amount of gas adsorbed is insufficient and the ejection of gas can not be suppressed completely.

The present invention has been made in view of the above problems, and an object of the present invention is to provide a power storage device structure that can reduce the risk of ignition in the event of an abnormality such as damage to a power storage device, particularly to a power storage device stack in which multiple power storage devices are stacked, or overcharge.

### [Means for solving the Problems]

To achieve the above object, the present invention provides a power storage device structure comprising: a power storage device; and a casing that encloses the power storage device with a gap therebetween, wherein a molded body containing an acrylic resin or a molded body containing a copolymer of a monomer used for polymerization of an acrylic resin and another monomer is placed in the gap between the power storage device and the casing (Invention 1).

According to the invention (Invention 1), the molded body containing an acrylic resin or the molded body containing a copolymer of a monomer used for polymerization of an acrylic resin and another monomer is placed in a space of the casing that encloses the power storage device, rather than inside the power storage device, and it is thereby possible to reduce the risk of fire spreading to the outside of the casing when ignition occurs inside the power storage device.

In the above invention (Invention 1), the power storage device may preferably use a non-aqueous electrolyte (Invention 2).

In the above invention (Invention 1, 2), the molded body containing an acrylic resin or the molded body containing a copolymer of a monomer used for polymerization of an acrylic resin and another monomer may preferably contain an acrylic resin portion at 10 wt% or more in whole (Invention 3).

According to the invention (Invention 3), the effect of preventing the fire spreading to the outside when ignition occurs inside the power storage device can be suitably exhibited.

In the above invention (Invention 1 to 3), the acrylic resin may be preferably a polymer of acrylic ester or methacrylic ester (Invention 4).

In the above invention (Invention 1 to 4), the acrylic resin may be preferably a polymer of methyl methacrylate (Invention 5).

In the above invention (Invention 1 to 5), the molded body containing an acrylic resin or the molded body containing a copolymer of a monomer used for polymerization of an acrylic resin and another monomer may be preferably in a form of a film, sheet, or plate (Invention 6).

According to the invention (Invention 6), by making the molded body into the form of a film, sheet, or plate, the molded body can have a wide variety of installation variations, such as attaching it inside the casing and inserting it into a gap, and can be excellent in the handling properties.

In the above invention (Invention 6), the molded body in the form of a film, sheet, or plate may preferably have a thickness of 1 to 50,000 µm (Invention 7). Particularly in the above invention (Invention 6 or 7), the molded body in the form of a film, sheet, or plate may preferably have a weight per area of 10 to 20,000 g/m² (Invention 8).

According to the invention (Invention 7, 8), by placing the molded body in the form of a film, sheet, or plate having predetermined thickness and weight in the gap between the power storage device and the casing, the effect of preventing the fire spreading to the outside when ignition occurs inside the power storage device can be suitably exhibited.

In the power storage device structure, the molded body containing an acrylic resin or the molded body containing a copolymer of a monomer used for polymerization of an acrylic resin and another monomer may be used as a battery case, a storage case or storage film for the power storage device, or the casing that encloses the power storage device (Invention 9).

In the above invention (Invention 1 to 9), a plurality of the power storage devices may be stacked (Invention 10).

In a power storage device stack in which multiple power storage devices are stacked, even if one power storage device falls into an overcharged state, the other power storage devices continue to function to flow a large current, thus resulting in severe overheating, and the flammable gas tends to exceed the ignition temperature. In this context, according to the invention (Invention 10), even if the flammable gas blows out from the power storage device and flows out into the space of the casing, the material of the present invention can affect the flammable gas thereby to significantly reduce the risk of fire spreading to the outside of the casing, and therefore the present invention can particularly suitably applied to such a power storage device stack.

### [Advantageous Effect of the Invention]

In the present invention, the molded body containing an acrylic resin or the molded body containing a copolymer of a monomer used for polymerization of an acrylic resin and another monomer is placed in the gap between the power storage device and the casing, so that the components generated when the acrylic resin is thermally decomposed by high-temperature ejected substance or gas released from the power storage device due to its short circuit can significantly reduce the risk of ignition of the power storage device structure.

### [Embodiments for Carrying out the Invention]

The power storage device structure of the present invention will be described below in detail based on the following embodiments.

### <Power Storage Device Structure>

The power storage device structure of the present embodiment includes a power storage device and a casing that encloses the power storage device with a gap therebetween, and has a structure in which a molded body containing an acrylic resin or a molded body containing a copolymer of a monomer used for polymerization of an acrylic resin and another monomer is placed in the gap between the power storage device and the casing.

### (Power Storage Device)

In the present embodiment, the power storage device is not particularly limited, and any of a primary battery and a secondary battery can be used, but a secondary battery may be preferred. The type of secondary battery is not particularly limited, and examples of usable ones include lithium-ion batteries, lithium-ion polymer batteries, all-solid-state batteries, lead-acid batteries, nickel-metal hydride batteries, nickel-cadmium batteries, nickel-iron batteries, nickel-zinc batteries, silver oxide-zinc batteries, metal-air batteries, multivalent-cation batteries, and capacitors. Among these, those using non-aqueous electrolytes can be suitably used. Among these secondary batteries, lithium-ion batteries, lithium-ion polymer batteries, lithium-ion capacitors, all-solid-state batteries, etc. can be preferably used as suitable application targets of packaging materials for batteries of the present invention.

Examples of the above non-aqueous electrolytes for use include a mixed solution of a cyclic carbonate such as propylene carbonate (PC) or ethylene carbonate (EC) and a chain carbonate such as dimethyl carbonate (DMC), ethylmethyl carbonate (EMC), or diethyl carbonate (DEC) . The above non-aqueous electrolyte may be one in which a lithium salt such as lithium hexafluorophosphate is dissolved as an electrolyte as necessary. For example, the non-aqueous electrolyte for use can be obtained by adding 1 mol/L of lithium hexafluorophosphate to a mixed liquid of ethylene carbonate (EC), ethyl methyl carbonate (EMC), and dimethyl carbonate (DMC) in a ratio of 1:1:1 or to a mixed liquid of propylene carbonate (PC), ethylene carbonate (EC), and diethyl carbonate (DEC) in a ratio of 1:1:1.

The power storage device as described above may be in the form of a power storage device stack in which multiple power storage devices are stacked. In a power storage device stack, even if one power storage device falls into an overcharged state, the other power storage devices continue to function to flow a large current, so when a flammable gas is generated due to the non-aqueous electrolyte, the flammable gas tends to exceed the ignition temperature, and the present invention may therefore be particularly suitable for such a power storage device stack.

### (Casing)

In the present embodiment, the casing is not particularly limited, provided that it can enclose the above-described power storage device (power storage device stack) with a gap therebetween. The casing may be represented by a storage case for the power storage device (power storage device stack), such as a battery case, a housing of equipment that uses the power storage device (power storage device stack), etc. The material of this casing is not limited, such as synthetic resin or metal.

### (Ignition Prevention Material)

In the present embodiment, the ignition prevention material installed in the gap between the power storage device and the casing may be a molded body containing an acrylic resin or a molded body containing a copolymer of a monomer used for polymerization of an acrylic resin and another monomer.

Acrylic resins are polymers of acrylic esters or methacrylic esters, among which methyl methacrylate polymers are widely used, but are not limited to them.

Examples of the other monomer copolymerized with the monomer used for polymerization of the acrylic resin include, but are not limited to, acrylonitrile, methyl acrylate, acrylamide, vinyl acetate, vinyl chloride, vinylidene chloride, and styrene. The amount of the other monomer may be preferably about 90 wt% or less and particularly preferably about 40 wt% or less with respect to the total 100 wt% of the monomer used for polymerization of the acrylic resin and the other monomer. If the amount of the other monomer is unduly large, the effect of reducing the risk of ignition of the power storage device structure will not be sufficient.

In the present embodiment, the shape of the molded body placed in the gap between the power storage device and the casing is not particularly limited, and may be in the shape of granulated powder, granule, bead, pellet, film, sheet, plate, honeycomb, etc. In consideration of easy handling when installed in the gap between the power storage device and the casing, the shape of the molded body may be preferably a film shape, a sheet shape, or a plate shape. By making the ignition prevention material into the form of a film, sheet, or plate, the ignition prevention material can have a wide variety of installation variations, such as attaching it inside the casing and inserting it into a gap. In this case, in order to increase the efficiency of contact with the ejected substance or ejected gas from the power storage device in a limited space, the film-like or sheet-like molded product can be made into a bellows structure to increase the contact area. Additionally or alternatively, these ignition prevention materials may be used by adsorbing or applying materials that exhibit a cooling effect on the ejected substance and ejected gas from the power storage device through heat transfer absorption, an effect to suppress a combustion radical reaction, and an extinction effect that destabilizes the flame on the adsorbent surface. Note that the molded body containing an acrylic resin or the molded body containing a copolymer of a monomer used for polymerization of an acrylic resin and another monomer in the present embodiment does not include a woven fabric, a nonwoven fabric, or the like of a fibrous material of an acrylic resin or a copolymer of a monomer used for polymerization of an acrylic resin and another monomer.

The ignition prevention materials as described above may each be used alone or two or more types of materials may also be used in combination.

In the power storage device structure, the molded body containing an acrylic resin or the molded body containing a copolymer of a monomer used for polymerization of an acrylic resin and another monomer may be used as a battery case, a storage case or storage film for the power storage device, or the casing that encloses the power storage device.

The power storage device structure of the present invention has been described above, but the size, shape, or the like of the power storage device (power storage device stack) is not particularly limited, provided that the molded body containing an acrylic resin or the molded body containing a copolymer of a monomer used for polymerization of an acrylic resin and another monomer is placed in the gap between the power storage device (power storage device stack) of the present invention and the casing. The power storage device structure can therefore be applied to power storage devices (power storage device stacks) of a wide range of sizes from smartphones to in-vehicle devices.

### [Examples]

The present invention will be described in more detail based on the following specific examples, but the present invention is not limited to the following examples.

### <Overcharge Test>

### (Comparative Example 1)

A PP resin container assumed to be the container of a power storage device was prepared (inner diameter: lateral 80 mm×length 105 mm×depth 34 mm, resin thickness 2 mm, a container in which the electrode side of an aluminum laminated lithium-ion battery was placed on the 80 mm lateral side of the PP resin container and the top surface was open with five holes of 10 mm in diameter drilled on the 80 mm lateral side of the PP resin container). A 1500 mAh aluminum laminated lithium-ion battery (lateral: 35 mm, length: 75 mm) with a positive electrode ternary system was installed inside the PP resin container, and a lid was placed over it with a PP resin plate having a resin thickness of 4 mm. The periphery of the lid was sealed using a heat-resistant tape so that there were no gaps. Thus, the PP resin container was configured such that the ejected substance from the lithium-ion battery due to overcharge would be released only through the five holes.

On the outside of the PP resin container assumed to be the container of the power storage device, a PP resin container assumed to be the container of a casing was placed (inner diameter: lateral 98 mm×length 148 mm×depth 48 mm, resin thickness 2 mm, a container in which the top surface was open with five holes of 10 mm in diameter drilled on the 98 mm lateral side (a container with holes drilled on the opposite side to the drilled sites of the PP resin container assumed to be the container of the above energy storage device)). The battery was wired so as to be overcharged, and a lid was placed over it with a PP resin plate having a thickness of 4 mm. The periphery of the lid was sealed using a heat-resistant tape so that there were no gaps. Thus, a power storage device structure was configured such that the ejected substance due to overcharge would be released only through the five holes.

When this power storage device structure was overcharged at 15V and 7.5A, the battery was destroyed after about 19 minutes, and severe ignition was confirmed on the outside of the casing.

### (Example 1)

In the power storage device structure used in Comparative Example 1, a plate-like molded body (thickness: 1000 pm, weight per area: 1150 g/m²) of acrylic resin (100% polymer of methyl methacrylate) was attached with a double-sided tape within 0.011 m² to the inner surface of the upper lid PP resin plate of the PP resin container assumed to be the casing, and a power storage device structure was thus obtained.

When this power storage device structure was overcharged under the same conditions as in Comparative Example 1, that is, at 15V and 7.5A, the battery was destroyed after about 19 minutes, but no ignition was observed on the outside of the casing.

### (Example 2)

In the power storage device structure used in Comparative Example 1, a film-like molded body (thickness: 200 pm, weight per area: 230 g/m²) of acrylic resin (100% polymer of methyl methacrylate) was attached with a double-sided tape within 0.011 m² to the inner surface of the upper lid PP resin plate of the PP resin container assumed to be the casing, and a power storage device structure was thus obtained.

When this power storage device structure was overcharged under the same conditions as in Comparative Example 1, that is, at 15V and 7.5A, the battery was destroyed after about 19 minutes, but no ignition was observed on the outside of the casing.

### (Example 3)

In the power storage device structure used in Comparative Example 1, a plate-like molded body (thickness: 1000 pm, weight per area: 1100 g/m²) of a copolymer of 49 wt% methyl methacrylate and 51 wt% styrene was attached with a double-sided tape within 0.011 m² to the inner surface of the upper lid PP resin plate of the PP resin container assumed to be the casing, and a power storage device structure was thus obtained.

When this power storage device structure was overcharged under the same conditions as in Comparative Example 1, that is, at 15V and 7.5A, the battery was destroyed after about 19 minutes, but no ignition was observed on the outside of the casing.

### (Example 4)

In the power storage device structure used in Comparative Example 1, the PP resin container assumed to be the container of the casing was substituted with a 1000 methyl methacrylate polymer container (inner diameter: lateral 98 mm×length 148 mm×depth 48 mm, resin thickness 2 mm, a container in which the top surface was open with five holes of 10 mm in diameter drilled on the 98 mm lateral side (a container with holes drilled on the opposite side to the drilled sites of the PP resin container assumed to be the container of the above energy storage device)) and placed. The battery was wired so as to be overcharged, and a lid was placed over it with a 100% methyl methacrylate polymer plate having a thickness of 4 mm as substitute for the PP resin plate. The periphery of the lid was sealed using a heat-resistant tape so that there were no gaps. Thus, a power storage device structure was configured such that the ejected substance due to overcharge would be released only through the five holes.

When this power storage device structure was overcharged under the same conditions as in Comparative Example 1, that is, at 15V and 7.5A, the battery was destroyed after about 19 minutes, but no ignition was observed on the outside of the casing.

## Claims

1. A power storage device structure comprising:
a power storage device; and
a casing that encloses the power storage device with a gap therebetween,
wherein a molded body containing an acrylic resin or a molded body containing a copolymer of a monomer used for polymerization of an acrylic resin and another monomer is placed in the gap between the power storage device and the casing.

2. The power storage device structure according to claim 1, wherein the power storage device uses a non-aqueous electrolyte.

3. The power storage device structure according to claim 1 or 2, wherein the molded body containing an acrylic resin or the molded body containing a copolymer of a monomer used for polymerization of an acrylic resin and another monomer contains an acrylic resin portion at 10 wt% or more in whole.

4. The power storage device structure according to any one of claims 1 to 3, wherein the acrylic resin is a polymer of acrylic ester or methacrylic ester.

5. The power storage device structure according to any one of claims 1 to 4, wherein the acrylic resin is a polymer of methyl methacrylate.

6. The power storage device structure according to any one of claims 1 to 5, wherein the molded body containing an acrylic resin or the molded body containing a copolymer of a monomer used for polymerization of an acrylic resin and another monomer is in a form of a film, sheet, or plate.

7. The power storage device structure according to claim 6, wherein the molded body in the form of a film, sheet, or plate has a thickness of 1 to 50,000 µm.

8. The power storage device structure according to claim 6 or 7, wherein the molded body in the form of a fabric or sheet has a weight per area of 10 to 20,000 g/m².

9. The power storage device structure according to any one of claims 1 to 8, wherein the molded body containing an acrylic resin or the molded body containing a copolymer of a monomer used for polymerization of an acrylic resin and another monomer is used as a battery case, a storage case or storage film for the power storage device, or the casing that encloses the power storage device.

10. The power storage device structure according to any one of claims 1 to 9, wherein a plurality of the power storage devices are stacked.
